# EUROPEAN PATENT SPECIFICATION

(11) **EP 1 420 638 B1**
(45) Date of publication and mention of the grant of the patent: **02.02.2005**
(21) Application number: 02767412.6
(22) Date of filing: 21.08.2002
(51) Int. Cl.: A01M 1/20, A01M 1/02

(54) **DEVICE FOR CONTROLLING INSECTS**
INSEKTENBEKÄMPFUNGSVORRICHTUNG
DISPOSITIF DE LUTTE CONTRE LES INSECTES

(30) Priority: 22.08.2001 DE 10140172
(43) Date of publication of application: 26.05.2004
(73) Proprietor: Bayer CropScience S.A., 69009 Lyon (FR)
(72) Inventor: KNAUF, Werner, 65835 Liederbach (DE); GRANGE, Jean-Luc, 65929 Frankfurt (DE); PARRISH, Mark, Research Triangle Park, NC 27709 (US)
(74) Representative: Rippel, Hans Christoph, Dr.
(86) International application number: PCT/EP2002/009318
(87) International publication number: WO 2003/017759

(56) References cited:
- CH-A- 145 906
- FR-A- 2 468 305
- US-A- 1 645 715
- US-A- 4 992 268

## Description

The present invention relates to a device for controlling insects, in particular a device for controlling flying insects, which is approximately fruit-shaped. The device is suitable for the targeted control of specific insects, in particular flying insects.

Fruit flies and other Diptera which play a role in crop protection are traditionally controlled by applying insecticides to the crop, i.e. by spraying crop protection products during the time when these insects are active. Since, after oviposition, their larvae develop directly in the harvested crop (for example fruits), which are generally consumed shortly after harvesting, the use of suitable, highly potent insecticides with a short harvest interval is greatly limited, in particular since the larvae, when inside the fruit, are virtually inaccessible to control. The methods used are thus limited to controlling the adult stages of these insects (fruit flies in the strict sense).

In this context, only those insecticides can be employed successfully which kill the adult fruit flies by rapid contact action so that oviposition by the females on the fruits does not take place. It is mainly pyrethroids which are employed for this purpose, but their use according to this traditional method is subject to restrictions owing to a variety of properties (for example resistance symptoms and a relative broad spectrum of action). In particular, these methods are also disadvantageous in as far as special precaution has to be taken to avoid undesired insecticide residues in the harvested crop.

Insecticides which display their effect upon ingestion (stomach-acting insecticides) and which are mixed with sugar, molasses or other substances which the target insects feed on are employed as a further method. These mixtures are subsequently applied over much of the area under the crop to be protected, during which process the pests ingest the feedants and simultaneously also the insecticides. Again, disadvantages result since insecticide residues may be present in the crop, and application may be too indiscriminate.

There have therefore also emerged other methods for controlling pests, such as fruit flies, which are based on the premise that not all of the area under cultivation has to be treated with an insecticide. An attractant procedure is followed in which, using suitable attractants, these insect pests are attracted to traps, where they are destroyed. Attractants which are used for this purpose are odoriferous substances from mature fruit, pheromones or other, synthetic attractants which are located in specifically shaped traps which simultaneously do not allow the flies to escape and destroy them inside the trap. This can be effected either by a liquid which is located in the trap, with which liquid the animals come into contact and thus drown in the liquid, or by an insecticide which has a relatively high vapor pressure or a good contact action. Both properties bring about the destruction of the animals in these traps, and thus a reduction in the number of female fruit flies in the crop to be protected. As a consequence, oviposition and damage in the harvested crop are reduced.

Unfortunately, these traps have a characteristic which makes them only moderately suitable for a sufficient control level. This is, firstly, the fact that, when liquid traps are employed, they take a relatively long time to set up and maintain, and that the relatively large trap bodies are complicated to use and, when traps are used for relatively large crop areas, their storage, which is necessary, is relatively space-consuming. Moreover, the liquid traps have the characteristic that they lose their (trapping) capacity after a while, owing to the accumulation of dead flies, which is made even more difficult by the fact that higher temperatures cause the liquid in the traps to evaporate and make it necessary to top up same periodically.

This is why devices which destroy the pests, but do not simultaneously bring about accumulation of dead pests in the traps prove to be very useful. US 4,992,268 discloses the use of spheres which imitate a papaya. To this end, they are similar to the papaya in terms of color and size. In addition, the sphere contains a pheromone to attract female fruit flies. The sphere can be provided with an adhesive or else with an insecticide.

US 1,645,715 discloses a spherical insect trap comprising a supporting structure including a plurality of radiating wings and bait carrying elements to be mounted on the wings. In the operational state the supporting structure is enclosed by a spherical open mash casing.

It is an object of the present invention to create a device for controlling insects by means of which a large number of insects, in particular flying insects, can be controlled, without reaching a capacity limit owing to the device itself.

Therefore in one aspect of the invention there is provided a device for controlling insects (1; 7; 10; 15), in particular flying insects such as fruit flies, which is approximately fruit-shaped and which has a three-dimensional structure (2), with open spaces (4) and a plurality of surfaces (3) within the said structure, which surfaces can be directly contacted by insects from outside the structure (2).

A further aspect of the invention is the use of the above described device for controlling insects, preferably flying insects, in particular fruit flies.

In a further aspect of the invention there is provided a method for controlling insects, preferably flying insects, in particular fruit flies, wherein one or more of the above described devices are applied in a crop to be protected.

In yet further aspects of the invention there are provided the use of the device for controlling insects (1; 7; 10), as described above, against flying insects, wherein the device (1; 7; 10) contains a first region which predominately emits within a first spectral range, the first region being partially interrupted by second, smaller regions which emits within a different spectral range, as well as the use of the device for controlling insects (1; 7; 10) as described above against fruit flies, wherein the device (1; 7; 10) when hung has a larger first overall area which is approximately horizontal in contrast to a second overall area which is approximately vertical, and the use of a device for controlling insects (1; 7; 10) as described above against stable and/or house flies, wherein the device (1; 7; 10) when hung has a larger second overall area which is approximately vertical in contrast to a first overall area which is approximately horizontal.

A device according to the invention for controlling insects, in particular a device for controlling flying insects, is at least approximately fruit-shaped, i.e. it has approximately the silhouette of a fruit when viewed from an angle, preferably from any angle. The device consists of an open, three-dimensional structure with a plurality of surfaces where flying insects can make direct contact with the said surfaces from outside the three-dimensional structure.

Making direct contact means in particular in contrast to above-described traps where insects must crawl into the trap through narrow orifices, that an insect can fly into the open spaces of the three dimensional supporting structure and can then alight on a surface within the structure.

The three-dimensional structure is formed in particular at least in part by one or more elements e.g. disk-like elements, leaves or wings. These elements are preferably plane, and preferably arranged at an angle to one another. For example, the elements are perpendicular to one another. In particular, the structure is determined by the device's edges positioned at the outside. Preferably, the edges describe at least part of a curve. They may also describe the segment of a circle. In this manner, it is possible to create an open structure which, from a certain distance, is perceived as a three-dimensional solid body. The structure is preferably designed such that the structure appears as a three-dimensional body, no matter where it is viewed from. In another embodiment the structure is suitable for this purpose only when viewed from certain angles.

It is advantageous, particularly for reasons of stability, if at least one element of the strucure has a continuous surface, preferably as a solid body. For example, when the device is hung up, this avoids unduly severe swinging owing to air movement.

Also, the center of gravity of the device may be arranged such that the device, when placed on the ground, assumes a specific, stabilized orientation. This has the advantage that the device remains functional, even in the event that it falls from, for example, an attachment. In particular, insects can perceive the device as "windfall fruit". It is intended that the center of gravity is preferably arranged in a lower third of the device, in particular relative to a longitudinal axis of the device. For example, the device may contain a small weight which orientates the device along the line of gravity. The device may also be provided with a base.

In accordance with one embodiment, the three-dimensional structure is designed, for example, in such a way that an insect perceives it as a solid body when viewed from a distance of preferably up to approximately two meters. When, owing to this deception, the insect has come closer to the device, a second means to attract, in the form of an attractant, has an additional effect on the insect. The attractant itself can be volatile or permanently present. Attraction can furthermore be brought about by the specific design of the three-dimensional structure in order to mimic a specific fruit. To further support this, the structure can be colored and thus attract specific insects, in particular certain fruit fly species. Red hues in particular have proven effective for certain fruit fly species. Moreover, attraction can be effected via a reflection in a part of the electromagnetic spectrum which is invisible to the human eye, or else by fluorescence. The color can be imparted by paints, for example, acrylic paints. Good results have been achieved with textile colors. These means of attraction are selected in particular in combination and adapted to suit a single insect species or insect population to be controlled. Reference to advantageous choices of color, material and attractant and to advantageous insecticides, in particular with regard to a specific insect population to be controlled, will be made hereinbelow.

Thus, the insects are attracted in particular by a variety of stimuli:
1. By means of an odoriferous substance which signals a food source to the insects.
2. By means of a pheromone.
3. By means of the device itself, whose shape resembles a somewhat abstract fruit which the females of the target species in question prefer for oviposition (optical/visual attraction).
4. By means of a suitable color of the device, which is particularly attractive to the insects (optical/visual attraction).

Devices which use a combination of two or more of the above-mentioned stimuli, and which can therefore potentiate their effect, are particularly effective and preferred.

The open three-dimensional structure is preferably composed of planar elements, preferably in the form of modules. Thus, a large residence area for insects is created, which comprises in particular the surfaces of the structure facing the ground. These surfaces are preferably arranged such that an insect can enter and also leave the device again directly, i.e., without being detained in the process or prevented therefrom.

To assist the insects' approach, surfaces of the structure, which are arranged parallel to one another or one above the other, are preferably spaced at least one centimeter, in particular over two centimeters, apart. A further development of the invention provides that edges of such surfaces have a minimal distance of three and more centimeters. In accordance with yet a further development, this distance between the surfaces can increase or decrease the further an insect penetrates into the device.

In particular, surfaces of the three-dimensional structure form semi-open geometries, from which the device is preferably at least predominantly constructed. These geometries can be separated from one another, so that an insect has to leave the device in order to subsequently be able to reenter the structure from a different side of the device.

Due to the form of the device, whose silhouette approximately resembles a fruit, the fictitious enveloping surface along the outer edges of the open three-dimensional structure has approximately the shape of a three-dimensional fruit. The enveloping surface is, in this context, the area which constitutes the fictitious overall surface around the structure resembling the respective fruit. Alternatively, the enveloping surface is determined by means of planar, two-dimensional connections, the three-dimensional structure forming a polyhedron; a body delimited by planes. For example, this may be in part a pyramid, an octahedron or else a prism. In accordance with another embodiment, the enveloping surface may also be determined by fictitious curved two-dimensional connections, for example cylinder sections, conical surfaces, spheres or spherical segments, or else barrel-shaped bodies or ellipsoids, which are combined and follow the outer edges.

A further embodiment provides that the three-dimensional structure has a larger overall surface area than the overall surface area of the fictitious enveloping surface. In this manner, it is possible to provide a larger active surface for controlling the insects. It is preferred that a predominant portion of the overall surface is provided by a plurality of surfaces arranged one above the other. Preferably, the size of the overall surface of the structure exceeds that of the fictitious enveloping surface by at least a factor of two, preferably a factor of three or a factor of four. In particular, the device has a larger overall surface of approximately horizontally and/or vertically arranged surfaces in relation to an overall surface of the fictitious enveloping surface.

In accordance with an embodiment, the three-dimensional structure has at least two surfaces which are movable relative to one another. This arrangement enables, for example, the state of the device to be altered. Preferably, the device can thereby be bent, folded in or out, rotated or moved in any other way once or more, at least in parts. There exists also the possibility of moving two surfaces towards and/or away from each other. For example, a first and a second element can be inserted into one another, interlaced with one another, rotated into one another and/or shifted into one another. Also, the device may have one or more hinges so that a motion of rotation, for example around a hinge axis or else a hinge point, is possible. Preferably, the device can be locked. This can be effected via mechanical damping, latching or similar. Thus, the device is stabilized in a desired shape, for example to make it more weather-resistant. Dimensional stability can be achieved for example also by means of connecting regions, for example by means of adhesion, in particular gluing.

A further advantage of a mobile or partially mobile device is the possibility of packaging, storing and/or transporting the latter in a space-saving manner. Preferably, the device takes up a smaller volume in a state of transport than in an operational state. For example, the device is changed from the state of transport directly into the operational state by means of pulling apart, erecting or the like, without additional complicated steps being necessary.

A further embodiment provides that the three-dimensional structure is constructed from disk-like elements. Preferably, these can be joined by inserting them into one another, resulting in particular in a shape which is at least partially rounded, in particular an oval or else spherical shape.

In particular, the device is of a size which corresponds approximately to the size of the fruit which it mimics. Different dimensions may result depending on the region and continent. Typical fruits which are mimicked are cherries, olives, melons, apples, figs, oranges, lemons, bananas, kiwi fruit and the like. Typical sizes (height, length and diameter) result from the local fruit crops. For example, when mimicking an apple, the device has a diameter of preferably between 8 and 14 centimeters, in particular between 10 and 12 centimeters.

To keep down the transport costs, the device is also extremely light in comparison with a solid body. The weight of the device is preferably in a range of from 15 grams to 250 grams.

In accordance with a further embodiment, the device for controlling insects has a first element, e.g. a leaf, and a second element opposite to one another, the first element being smaller than the second element. This allows the three-dimensional structure and in particular the enveloping surface to be of a different size in different regions, and thus to have a variety of dimensions along a longitudinal axis of the structure. This generates a round; oval or at least partially convex geometry. Moreover, an interstice which can be targeted by insects is located between the first and the second leaf. Preferably, the three-dimensional structure is designed such that a device in the operational state has a large surface serving as alighting and/or residence area for insects. The residence area is preferably arranged such that an insect cannot be seen by a bird flying over the device. That is to say, the insects are covered while residing in an interstice when the device is viewed from above.

A further embodiment provides that, preferably in the case of a device in the operational state, most of the overall surface area of the device is arranged in the lower half of the device, in particular a larger part of the overall surface area in a region constituting approximately the bottom third of the device.

In a preferred embodiment the three-dimensional structure has approximately plane surfaces. This simplifies the manufacturing process, on the one hand, as well as a possible process of assembling the device by the user. In another preferred embodiment at least some of the elements of which the three-dimensional structure is comprised are domed. The dome is preferably arranged such that a center of the radius of the dome faces the ground when the device is in place. In another preferred embodiment at least some of the elements comprising the three-dimensional structure have surfaces which are not plane but have at least partially a three-dimensional surface geometry. The surface geometry can take the form of an undulation, an angular shape, elevations, curvatures, angulations or mixtures of these. Also, the surfaces may be provided with perforations through which an insect can reach the other side. Preferably, the surface geometry generates a boat-like repetitive shape along the surface, which corresponds at least approximately to the height of an insect, for example approximately one centimeter.

To free the device from any debris, dead insects and the like, the device preferably has at least to some extent inclines and/or sloping areas. The effect of wind and/or rain can be exploited to allow the cleaning power thus exerted to act towards the edges of the three-dimensional structure.

In accordance with a further embodiment, the device for controlling insects comprises a single element having the essential surface area of the three-dimensional structure. This makes possible a simplified manufacturing process, for example in the form of punching out or cutting the element, injection molding or other shaping processes. The three-dimensional structure manufactured in this way, for example, from one or more elements is preferably prefabricated to such an extent that it only requires assembling after delivery.

In accordance with a further development of the invention, the device contains essentially a biodegradable material. This can be obtained, for example, from starch, sugar or else cellulose. There is also the possibility of making the device predominantly of cardboard. Moreover, biodegradable man-made materials may be used, the device also being constructed of different, in particular biodegradable, man-made materials.

The material is chosen in particular such that the device disintegrates on its own at least partially after a predictable period, for example after a period of three or more months. The service life of the material can also be chosen such that it is adapted approximately to a fruiting, vegetation or else climatic cycle. There is furthermore the possibility of adjusting the service life such that a specific number of insect generations can be controlled.

Another embodiment provides that the device consists at least in part of a foam, in particular a foam which can be crushed and then returned to its original shape. In particular an open-celled foam is used, so that the inside of the foam can be used as a store for one or more compositions. For example, the foam takes the form of a PU foam.

To avoid the material(s) used getting moldy, in particular in areas with high atmospheric humidity, the device, in particular the material, contains a suitable control agent, in particular a fungicide. This avoids the development of molds. Other suitable chemicals or coatings may also be employed.

In terms of color, the material used is preferably already designed such that this color matches the desired features of the fruit which it mimics. It is also possible for the material to contain discrete areas of another color, in particular a dark color, preferably a black hue. This can be achieved, for example, by suitably admixing insoluble pigments in one of the components of the material employed.

It has furthermore proved advantageous for the device to show a mixture of colors as is also found in the fruit which it mimics. This means that the device can contain, for example, different hues of yellow, green, orange, red or brown. The colors may differ from one another, depending on the area. For example, an area facing the ground and an area facing the sky may be colored differently. The color may also emit, for example, a UV component.

In accordance with a further preferred embodiment, the device for controlling insects contains an insecticide. In general the insecticide or mixture of insecticides is contained on and/or in one or more surfaces of the three-dimensional structure. Preferably, the insecticide is present in a colorant on the surface of the three-dimensional structure and applied jointly therewith. Another embodiment provides that the insecticide has been applied to the surface on its own. The insecticide may also be present only in certain areas, in particular in the form of small areas. For example, the insecticide is sprayed on or applied by dipping. It may also be provided with a gas-permeable coating. One or more insecticides may be used. The insecticide can be colorless or colored itself. Preferably, the insecticide is colored to match the desired emission emitted from the surface. Likewise, certain areas can be provided with different insecticides, or else individual areas can be free from insecticides. The insecticide may also be present in solid form and subsequently evaporate or else be taken up by insects in the form of volatile particles when the device is operational. For example, US 4,237,113 and US 5,720,968, which are referred to in their entirety with regard to the different active ingredients and polymers used and the principle of incorporating and releasing active ingredients preferably into the polymer and their use for controlling various insects, disclose an insecticide which is present in a polymer and released over time.

Insecticides that can be used include chlorpyrifos, chlorpyrifos-methyl, diazinon, dichlorvos, dimethoate, fenitriothion, malathion, methamidophos, parathion, phosphocarb, pirimiphos, primiphos-ethyl, pirimiphos-methyl, triazophos, acrinathrin, allethrin, alphametrin, 5-benzyl-3-furylmethyl (E)-(1R)-cis-2,2-di-methyl-3-(2-oxothiolan-3-ylidenemethyl)cyclopropanecarboxylate, beta-cyfluthrin, beta-cypermethrin, bioallethrin, bioallethrin ((S)-cyclopentyl isomer), bioresmethrin, bifenthrin, (RS)-1-cyano-1-(6-phenoxy-2-pyridyl)methyl (1RS)-trans-3-(4-tert-butylphenyl)-2,2-dimethylcyclopropanecarboxylate (NCI 85193), cycloprothrin, cyfluthrin, cyhalothrin, cythithrin, cypermethrin, cyphenothrin, deltamethrin, empenthrin, esfenvalerate, fenfluthrin, fenpropathrin, fenvalerate, flucythrinate, flumethrin, fluvalinate (D isomer), imiprothrin (S-41311), lambda-cyhalothrin, permethrin, pheothrin ((R) isomer), prallethrin, pyrethrins (natural products), resmethrin, tefluthrin, tetramethrin, theta-cypermethrin (TD-2344), tralomethrin, transfluthrin and zeta-cypermethrin (F-56701), abamectin, acetamiprid, diacloden (thiamethoxam), fipronil, imidacloprid, ivermectin, spinosad, thiacloprid.

The above-mentioned components are known active substances, many of which are described in C D S Tomlin (Editor), The Pesticide Manuel, 12^{th} edition, The British Crop Protection Council, Farnham, UK, 2000.

The use of fipronil, deltamethrin and/or imidacloprid is preferred.

The device furthermore permits the use of smaller amounts of highly effective insecticides. The insect which has come into contact once with the insecticide is thereby intended to die preferably within the next 48, especially preferably 24, in particular 12, hours. Since the device has a large surface area, it suffices, for example, to distribute a few milligrams over the surface of the device. For example, insecticides can be employed at a use concentration/rate of from 0.01 to 10 mg, preferably from 0.1 to 5 mg, of active substance per square centimeter of surface area.

Further insecticides which can be employed are, for example, the insecticides disclosed in WO-A 00/62617, in particular for controlling the Mediterranean fruit fly, which may also have a sterilizing effect, for example on the male population. Likewise, agents may be employed which bring about sterilization of the female population. The publication stated and those stated hereinbelow are each referred to in their entirety with regard to the agents used, their structure and release and their specific use for the purposes of the present invention.

Further, one or more other bioactive chemicals or else biological material may be present on the device, in addition to or independently of the existence of an insecticide. Preferably, the device also contains an attractant, in particular an attractant designed to attract a specific insect. Examples of suitable chemicals, insecticides, biological material, incorporation into the device, release and applications can be found in the following documents, whose content is incorporated by reference in its entirety for the purposes of the present invention:

Suitable attractants are disclosed, for example, in US 4,877,607 for controlling the Malaysian fruit fly, in EP-A 0 340 972, in US 4,152,422 for controlling the Mediterranean fruit fly, in WO 85/01638 for controlling fruit flies, in particular with reference to the use of suitable bacteria, insecticides and attractants for the control, in US 4,820,513, whose attractant is in particular released gradually over time, attractants and insecticides and their application as disclosed in US 5,359,808 for the control of, in particular, house flies, olive fruit flies, cherry fruit flies and the Mediterranean fruit fly, in US 4,992,268 for controlling the papaya fruit fly, in WO 97/14305 for controlling the Mexican fruit fly, in particular also using a system of attractant and insecticide, where a phytotoxic insecticide is used, in GB955681, GB955680 and GB2089212 regarding attractants, insecticides and their use for controlling various fruit fly species. Pheromones as are disclosed, for example, in US 4,992,268 can also be used as attractant. Suitable pheromones are also disclosed in the Pherolist (http://www.nysaes.cornell.edu/fst/faculty/acree/pheronet).

Further examples of suitable attractants are ammonium salts as carbonates, bicarbonates or acetates (Sigma Aldrich Chemie GmbH, Steinheim, Germany), preferably for attracting Ceratitis captita, Dacus oleae, Rhagoletis pomonella, Rhagoletis cerasi and Bactrocera spp.; Trimedlure and Capilure (Oecos, Kimpton, Hertfordshire, UK), preferably for attracting Ceratitis captita; olive fruit fly pheromones (Vioryl, Athens, Greece), preferably for attracting Dacus oleae; butyl hexanoate and alpha-farnesene (Bedoukian Research Inc., Danbury, CT, USA); preferably for attracting Rhagoletis pomonella; methyl eugenol and Cue-Lure, preferably for attracting Bactrocera spp..

Suitable attractant formulations are also disclosed in German patent application 102 18 428.3.

Further advantageous features and embodiments of the invention, in particular with regard to specific active ingredients, attractants, insecticides, other agents, colors, compositions of materials, degradation behavior of materials, modes of action of materials and agents employed, colors and dimensions, in particular with regard to specific insects, uses and mechanisms of action, which can also be employed in each case alone or in combination in the device, can be found in the documents stated hereinbelow and the references cited therein, each of which is referred to for the purposes of the present disclosure: "Pursuit of effective pesticide-treated spheres for controlling apple maggot", in: Fruit Notes, Vol. 65, 2000, pages 45 to 49; "Post-alighting responses of Mexican fruit flies (Dipt., Tephritidae) to different insecticides in paint on attractive spheres" by Prokopy et. al., in: JAE 124 (2000), pages 139 to 244; "Effects of sugar/flour spheres coated with paint and insecticide on alighting female Ceratitis capitata (Diptera: Tephritidae) flies" of Xing Ping Hu et al., in: Florida Entomologist, September 1998 (Vol. 81, No.3), page 318 et seq.; "Apple maggot fly (Diptera: Tephritidae) response to perforated red spheres" by Alan Reynolds et. al., in: Florida Entomologist, June 1996 (Vol. 79, No.2), page 173 et seq.; "Mortality of Rhagoletis Species encountering pesticide-treated spheres (Diptera: Tephritidae)" by Oscar Liburd et. al., in: Journal of Horticultural Entomology 1999 (Vol. 92, No.5), page 1151 to page 1156; "Performance of various trap types for monitoring populations of cherry fruit fly (Diptera: Tephritidae) species" by Oscar Liburd et. al., in: Journal of Environmental Entomology, 2001 (Vol. 30, No.1), page 82 to page 88; "Role of visual and olfactory stimuli in host finding of adult cabbage root flies, Delia radicum" by Tuttle et. al., in: Entomologia Experimentalis et Applicata 1988, Vol. 47, page 37 to page 44; "Local enhancement of arrivals of Ceratitis capitata females on fruit mimics", in: Entomologia Experimentalis et Applicata 2000, Vol. 97, page 211 to page 217; "Development of a dry plastic insect trap with food-based synthetic attractant for the Mediterranean and Mexican Fruit flies (Diptera: Tephritidae)" by Robert Heath et. al., in: Journal of Economic Entomology, 1995, Vol. 88, No.5, pages 1307 to 1315; "Effects of pheromone release rate and time of day on catches of male and female papaya fruit flies (Diptera: Tephritidae) on fruit model traps baited with pheromone" by Landolt et. al., in: Joumal of Economic Entomology 1990, Vol. 83, No.5, page 2040 to page 2043.

Preferred target insects which can be controlled by the device include from the order of the Dermaptera, for example, Forficula spp., Forficula auricularia. From the order of the Thysanoptera, for example, Frankliniella spp., Frankliniella fusca, Frankliniella occidentalis, Frankliniella tritici, Kakothrips spp., Hercinothrips spp., Scirtothrips spp., Scirtothrips citri, Scirtothrips aurantii, Taeniothrips spp., Thrips spp., Thrips oryzae, Thrips palmi, Thrips tabaci, Plutella xylostella, Cydia pomonella, Agrotis spp., Heliothis spp., Helicoverpa spp., Prodenia spp., Spodoptera spp., Chilo spp., Lobesia spp., Leptinotarsa spp., Diabrotica spp., Anthonomus spp., Diprion spp., Vespa spp. From the order of the Diptera, for example, Drosophila spp., Drosophila melanogaster, Chrysomyxa spp., Hypoderma spp., Tannia spp., Bibio spp., Bibio hortulanus, Oscinella spp., Oscinella frit, Phorbia spp., Pegomyia spp., Anastrepha spp., Ceratitis spp., Dacus spp., Rhagoletis spp., Bactrocera spp., Toxotrypana spp., Tipula spp., Tipula paludosa, Tipula oleracea, Dermatobia spp., Dermatobia hominis, Cordylobia spp., Cordylobia anthropophaga, Gasterophilus spp., Hypoderma spp., Cuterebra spp., Cochliomyia spp., Wohlfahrtia spp., Stomoxys spp., Calliphora spp., Calliphora erythrocephala, Gastrophilus spp., Hyppobosca spp., Lucilia spp., Lucilia sericata, Musca spp., Musca domestica, Fannia spp., Fannia canicularis, Oestrus spp., Tabanus spp.

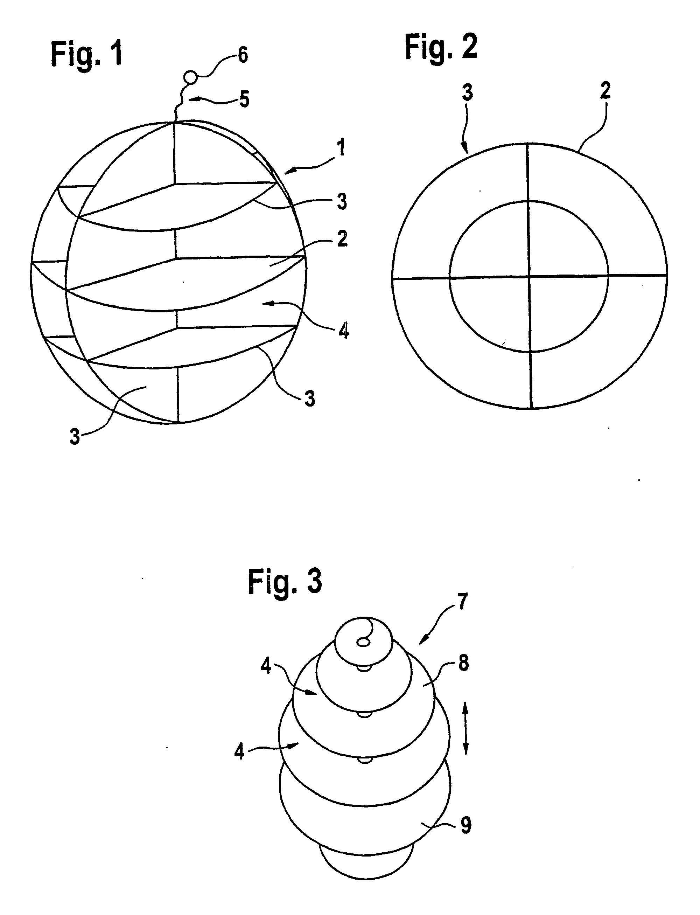

A preferred use of the device according to the invention relates to the control of Rhagolecis pomonella. A device provided for this control preferably has a red hue. The device has a structure in the shape of a three-dimensional apple, a diameter of the device preferably being approximately 10 to 12 centimeters and a surface area being 250 to 600 square centimeters. A device shown herein below in Fig. 1 is preferred. In particular, at least most of the device is covered in papier-mâché impregnated with a textile color, preferably with 0.1 to 10 mg of color per square centimeter. The papier-mâché preferably contains a fungicide. The textile color preferably also contains an attractant. For example, insecticides such as fipronil, deltamethrin and/or imidacloprid can be employed in one of the abovementioned use concentrations/rates, preferably of from 0.1 to 5 mg, especially preferably of from 0.8 to 1.8 mg, of active substance per square centimeter of surface area.

It has furthermore proved advantageous to use a vapor-permeable color or impregnation for the device. In this case, attractant and/or insecticide can be emitted in the operational state in the form of a gas.

In accordance with a further embodiment, the device for controlling insects contains a repellant. The purpose of the repellant is to repel animals which should not come into contact with the device. For example, the repellant prevents game from eating a device for controlling insects which has fallen on the ground.

An attractant in particular, but also other chemicals, can be introduced into the device, for example, in a prefabricated manner. Preferably, one or more receptacles are inserted into the device at previously determined sites or locations, from which receptacles the substance can be released. Capsules may also be employed for this purpose. To this end, the device has suitable orifices, recesses or passages.

A protective measure, in particular for humans, is provided by the following embodiment. The three-dimensional structure is equipped with means for suspending the device and a protective cover (covering the insecticide and/or attractant), the protective cover being removable, while the device can simultaneously be held via the hanging means, to avoid direct contact with the three-dimensional structure. If the device already contains a chemical, or if the device is not to come into direct contact with humans, for example in order to avoid being tainted with a human scent, the protective cover helps to limit such a contact. Inside the protective cover, no contact is made with the device. Means for suspending the device are, for example, a tape, a string or another means of fastening, such as clips, hooks, spring hooks or the like.

A further embodiment which is independent of the solution shown above, is achieved by a device for controlling insects, which is a component of a kit for controlling insects, the kit containing an adhesive for trapping insects. Preferably, the adhesive can be removably applied to the device. It can take the form of, for example, an adhesive applied by means of a detachable adhesive strip or other means of fastening. By reference to the insects which have been trapped predominantly on the adhesive as the consequence of a test, for example a specific combination of one or more insecticides, one or more attractants, a specific shape of the device and/or one or more colors which is particularly advantageous for the species to be controlled can then be used from the kit. Preferably, the kit has added to it a specific means of identification, for example in the form of an overview, so that, firstly, the insect can be identified and, secondly, suitable means of control can be assigned by an invariably predeterminable linkage to the classification. For example, one embodiment provides the automated preparation, in a mixing device, of an insecticide, an attractant and/or a color of one or more agents which are then used in a multiplicity of the devices. Automated preparation prevents, firstly, the mixing of an incorrect formula and, secondly, it can help to avoid contact with one or more substances which may be health hazards for humans. One development provides the miscibility even of different hues, for example red, yellow and/or green.

A further solution which can likewise be realized independently of those shown above is a device for controlling insects which is a component of a kit, the kit having a variety of elements from which different three-dimensional structures can be made which mimic different fruit shapes. In particular, the elements can be designed such that they result in a structure as described above.

The device for controlling insects is preferably used against flying insects. The device preferably has a first region which predominantly emits within a first spectral range, the first region being partially interrupted by second, smaller regions which emit within a different spectral range. These second, smaller regions are preferably dark, in particular black, dot-like or very small regions which are preferably intended to mimic insects which are already present. In a further embodiment, the smaller regions are blushes of color as they are likewise known in nature on the fruits which are being mimicked.

A preferred use of the device for controlling insects is the control of fruit flies. In a preferred embodiment for this use, the device, in the suspended state, has a larger first overall area which is approximately horizontal, in contrast to a second overall area which is approximately vertical.

An additional use of the device for controlling insects is the use against stable flies and/or domestic flies. In a preferred embodiment for this use, the device, in the suspended state, has a larger first overall area which is approximately vertical, in contrast to a second overall area which is approximately horizontal.

The device for controlling insects is preferably employed in plantations, large crops/plantings, warehouses, domestic premises, known breeding grounds and other locations.

The device according to the invention is preferably used in agriculturally important crops, preferably fruit crops, for example in fruit plantations. Particular preference is given to using the device according to the invention in crops of Coffea (coffee), Capsicum annuum (peppers), Citrus, Prunus (stone fruit), Ficus carica (fig), Malus domestica (apple), Psidium guajava (guava), Theobroma cacao (cocoa), Syzygium jambos (rose apple), Terminalia catappa (tropical almond), Prunus dulcis (almond), Persea americana (avocado), Mangifera indica (mango), Coffea arabica (coffee (arabica)), Carica papaya (papaya fruit), Citrus aurantium (Seville orange), Citrus limon (lemon), Citrus sinensis (orange), Diospyros (malabar nut), Eriobotrya japonica (Japanese medlar), Fortunella (kumquat), Musa paradisiaca (banana), Prunus armeniaca (apricot), Prunus domestica (plum), Prunus persica (peach), Spondias purpurea, Vitis vinifera (grape), Citrus reticulata (mandarin orange), Cydonia oblonga (quince), Eugenia uniflora (Surinam cherry), Pyrus communis (pear), Anacardium occidentale (cashew nut), Annona reticulata (Bahamian custard apple), Capsicum frutescens (red chilli), Carissa, Casimiroa edulis (white sapote), Chrysophyllum cainito (star apple), Citrus aurantiifolia (lime), Citrus limetta (sweet lime), Citrus grandis, Citrus limonia, Citrus nobilis (tangerine), Citrus reticulata x paradisi (satsuma), Citrus paradisi (grapefruit), Citrus aurantium (bitter orange), Citrus deliciosa (tangerine), Citrullus vulgaris (watermelon), Coffea liberica (Liberian coffee), Cyphomandra, Dovyalis caffra (kei apple), Eugenia, Garcinia mangostana, Juglans regia (walnut), Litchi chinensis (lychee), Malpighia glabra (Barbados cherry), Manilkara zapota (sapodilla), Mespilus germanica (medlar), Morus (black mulberry), Muntingia calabura, Opuntia (prickly pear), Phoenix dactylifera (date), Passiflora coerulea (passionfruit), Physalis peruviana (Cape gooseberry), Psidium littorale (strawberry guava), Punica granatum (pomegranate), Rubus loganobaccus (loganberry), Spondias cytherea (sweet monbin plum), Syzygium cumini (Java plum), Syzygium malaccense (Malay apple), Syzygium samarangense (Java apple), Thevetia peruviana, Cyphomandra betacea (tree tomato), Fortunella japonica (marumi kumquat), Olea europeae (olive), Rubus idaeus (raspberry), Vaccinium corymbosum (blueberry), Vaccinium vitis-idaea (cranberry), Lycopersicon esculentum (tomato), Rubus fruticosus (true blackberry), Fragaria ananassa (strawberry), Actinidia chinensis (kiwi), Ribes uva-crispa (gooseberry), Pereskia aculeata (Barbados gooseberry), Ribes nigrum (blackcurrant), Ribes rubrum (redcurrant), Cerasus avium (cherry), Ananas comosus (pineapple).

A further embodiment provides that the device is reusable. That is to say, the agents required, such as attractant, insecticide and others, can be replenished or exchanged.

Further advantageous embodiments and features are shown in the description of the figures which follows, which can be combined in each case together with features shown above to give novel developments.
- Figure 1: shows a first device for controlling insects,
- Figure 2: shows a view of the first device for controlling insects from above,
- Figure 3: shows a second device for controlling insects,
- Figure 4: shows a third device for controlling insects,
- Figure 5: shows elements for a device for controlling insects.

Figure 1 shows a first device for controlling insects 1 with a three-dimensional structure 2. The three-dimensional structure has disks 3. Between the disks 3, interstices 4 are arranged, which can be approached directly, for example by a flying insect. A hanging means 5 is attached to the device 1. The device 1 can be fastened removably at a given location via a loop 6. The structure has a plurality of discs 3 both in vertical and in horizontal orientation. In each case, the disks form interstices (open spaces) 4 which are separated from one another, but which are open to such an extent that an insect can enter the interstices and then leave again. The shape of the first device 1 is spherical and resembles, e.g., an apple or an orange.

Figure 2 shows a view of the first device 1 from Figure 1 from above. It can be seen that the structure 2 retains three-dimensionality even when viewed from this angle. Insects which reside in the interstices cannot be seen when viewed from above, since they are covered horizontally and vertically by the disks 3. A similar device, which is not shown in greater detail at this point, results, for example, from the use of a bar to which discs can be fastened spaced apart from one another. This can be used in particular for obtaining vertically continuous interstices.

Figure 3 shows a second device for controlling insects 7, which is preferably composed of a first element 8 and a second element 9. The elements 8, 9 are, for example, helical or else spiral-shaped. In one region, the two elements 8, 9 are linked to one another and can be pulled apart in each case in opposite directions. This is indicated by the arrow. When the material is cut in a suitable manner, the second device 7 may also consist of only one element. The second device 7 likewise has open interstices (spaces) 4. However, these interstices 4 are not completely separated from one another. Rather, they are connected in this embodiment via a thread-like design of the interstices 4. The lead of the screw-shaped three-dimensional structure 2 may vary in this context.

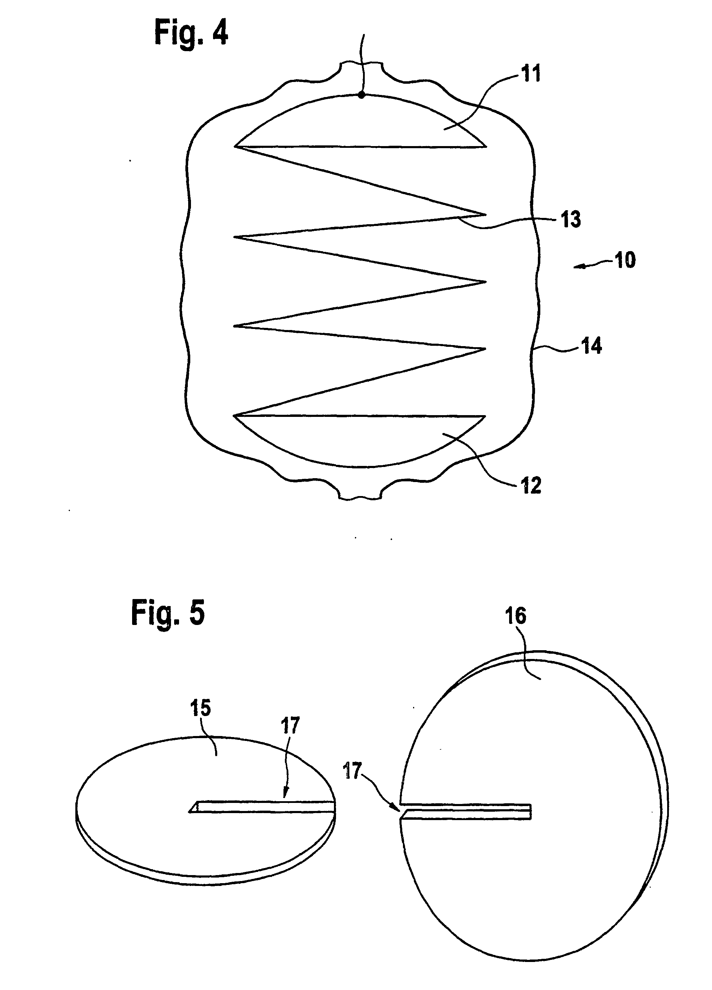

Figure 4 shows a schematic view of a third device for controlling insects 10. The fourth device has a top 11 and a bottom 12. A central element 13 is arranged between the top and the bottom 11, 12. The central element 13 is preferably foldable. The device 10 can be removed from a protective cover 14 by pulling on the hanging means. By doing so, it is intended to change the device 10 from a state of transport into an operational state. Thus, the device 10 can be removed from the protective cover in particular in such a way that direct contact with the central element 13 is avoided. The central element 13 is folded, thus creating interstices during the transition from the state of transport into the operational state. In accordance with a fold not shown here, folding may give rise not only to a zig-zag-shape, but also, for example, to rectangular profiles, areas which are almost perpendicular to one another, or other geometries forming a three-dimensional structure. The top 11 and the bottom 12 are preferably solid elements which stabilize the central element 13 by means of their weight. Also, at least one of the two elements 11, 12 may be at least in part hollow.

Figure 5 shows an example of a first 15 and a second 16 element of a kit (not shown in detail) for a device for controlling insects. The elements 15, 16 can be inserted into one another along slits 17, thus giving rise to a open three-dimensional structure. Number and arrangement of the slits can result in a wide range of shapes when employing differently shaped elements. Besides the process of shifting them into one another, which is shown, there exists the possibility of connecting the elements nonpositively and/or positively, for example by plugging or locking. Also, elements may be brought into suitable configurations by means of adhesive connections, for example adhesive surfaces.

The content of German patent application 101 40 172.8, from which this application claims priority, and the appended abstract is incorporated herein by reference.

The invention is further explained by the following examples without being restricted to them.

### Example 1

3 Absorbent cardboard disks (diameter about 10,5 cm) and 2 cardboard disks (diameter about 9,5 cm) from the same material, which has a thickness of 2mm, were modified with appropriate slots and mounted in a form which is described in Fig1. This device was painted twice with red latex paint, which contained 0,1% by weight of fipronil, and dried at room temperature. 10,5 cm full round papiermaché ball was painted with the same paint/fipronil combination and dried in the same manner.
Thereafter both painted devices were sprayed with a fluid glue in such a way, that a thin layer of glue was evenly distributed on all parts of both forms. Then they were suspended in the center of 1 m³ cages and both cages loaded with 200 individuals of Ceratistis capitata flies (8 days old, mixed population, about 50% males and 50% females) each. The cages were kept in a greenhouse and illuminated with diffuse light under a light regime of about 16h light and 8h dark for 24 hours. Thereafter the number of individuals trapped by each of the devices were counted. The results are displayed in Table 1:

**Table 1**

| Number of flies per cage | Full sphere device | Device according to the invention |
|---|---|---|
| 200 | 96 | 134 |

### Example 2

A full papermache ball device and a device according to the invention (Fig1), which had been treated with paint and insecticide, but were not covered with an additional layer of glue, were suspended in 1 m³ cages separately and the cages loaded with 200 individuals of Ceratistis capitata (about 8 days old, mixed population) as described in Example 1.
The cages were kept in a greenhouse as described in example 1 for 3 days. During this time the flies were fed with a 10% solution of glucose in water, which was presented on soaked cotton wicks laid on top of a porcelain bowl.
After that period the dead flies on the floor of each cage were counted. The results are displayed in Table 2:

**Table 2:**

| Number of flies per cage | Full sphere device | Device according to the invention |
|---|---|---|
| 200 | 128 | 187 |

### Example 3

### Control of Rhagolecis pomonella (apple maggot)

A device as shown in Figure 1, consisting of papier-mâché with a diameter of 10.7 cm and a total surface area of 450 square centimeters was impregnated with red textile color (5-25 ml of dye per device). In addition to the application of 0.8 to 4 mg of dye per square centimeter, the insecticide fipronil was applied at a use concentration/rate of 1.3 mg of active substance per square centimeter of surface area. In addition, the device was equipped with an effective dosage of the attractants butyl hexanoate, alpha-famesene and an ammonium salt.

Devices thus prepared were tested in apple plantations. Good results for controlling apple maggots (Rhagolecis pomonella) were obtained.

## Claims

1. A device for controlling insects (1; 7; 10), which is approximately fruit-shaped and which has a three-dimensional structure (2) with open spaces (4) and with a plurality of surfaces (3) within the said structure, which surfaces can be directly contacted by insects from outside the structure (2).

2. The device for controlling insects (1; 7; 10) as claimed in claim 1, wherein the device (1; 7; 10) has at least one or more disk-shaped elements (3), and wherein a fictitious enveloping surface along the outer edges of the disc-shaped element (3) has approximately the shape of a three-dimensional fruit.

3. The device for controlling insects (1; 7; 10) as claimed in claim 2, wherein the three-dimensional structure (2) has a greater surface area than the surface area of the fictitious enveloping surface.

4. The device for controlling insects (1; 7; 10) as claimed in claim 1, 2 or 3, wherein the three-dimensional structure (2) comprises two or more elements which are movable relative to one another.

5. The device for controlling insects (1; 7; 10) as claimed in any of the preceding claims, wherein the device for controlling insects (1; 7; 10) has a first and a second leaf which are opposite to one another, the first leaf being smaller than the second leaf.

6. The device for controlling insects (1; 7; 10) as claimed in any of the preceding claims, which has approximately plane surfaces.

7. The device for controlling insects (1; 7; 10) as claimed in any of the preceding claims, which occupies a smaller volume in a state of transport than in an operational state.

8. The device for controlling insects (1; 7; 10) as claimed in any of the preceding claims, wherein the three-dimensional structure (2) contains a single element containing the essential surface area of the structure (2).

9. The device for controlling insects (1; 7; 10) as claimed in any of the preceding claims, wherein the device (1; 7; 10) comprises a biodegradable material.

10. The device for controlling insects (1; 7; 10) as claimed in claim 9, wherein the device (1; 7; 10), comprises a fungicide.

11. The device for controlling insects (1; 7; 10) as claimed in any of the preceding claims, wherein an insecticide is applied, to one or more surface areas of the three-dimensional structure (2).

12. The device for controlling insects (1; 7; 10) as claimed in any of the preceding claims, wherein the device (1; 7; 11) contains a repellent.

13. The device for controlling insects (1; 7; 10) as claimed in any of the preceding claims, wherein the device (1; 7; 10) contains a means for suspension (5) and a protective cover (14), the protective cover (14) being removable, while the device (1; 7; 10) can simultaneously be held by means for suspension (5) to avoid direct contact with the three-dimensional structure (2).

14. The device for controlling insects (1; 7; 10) as claimed in claim 1, wherein the device (1; 7; 10) is part of an insect control kit.

15. The device for controlling insects (1; 7; 10) as claimed in claim 14, wherein the kit comprises a variety of elements from which various three-dimensional structures (2) which mimic a variety of fruit shapes can be constructed.

16. The use of a device for controlling insects (1; 7; 10) as claimed in claim 1 against flying insects, wherein the device (1; 7; 10) contains a first region which predominantly emits within a first spectral range, the first region being partially interrupted by second, smaller regions which emit within a different spectral range.

17. The use of a device for controlling insects (1; 7; 10) as claimed in claim 1 against fruit flies, wherein the device (1; 7; 10) when suspended has a larger first overall area which is approximately horizontal in contrast to a second overall area which is approximately vertical.

18. The use of a device for controlling insects (1; 7; 10) as claimed in claim 1 against stable and/or house flies, wherein the device (1; 7; 10) when suspended has a larger second overall area which is approximately vertical in contrast to a first overall area which is approximately horizontal.

## Patentansprüche

1. Insektenbekämpfungsvorrichtung (1; 7; 10; 15), insbesondere Fluginsektenbekämpfungsvorrichtung (1; 7; 10; 15), die zumindest annähernd eine Fruchtform aufweist,
**dadurch gekennzeichnet, dass**
die Vorrichtung (1; 7; 10; 15) eine offene, mehrere Zwischenräume (4) aufweisende, dreidimensionale Kontur (2) hat, deren Oberfläche durch Anflug von Insekten direkt von außerhalb der dreidimensionalen Kontur (2) kontaktierbar ist.

2. Insektenbekämpfungsvorrichtung (1; 7; 10; 15) nach Anspruch 1, **dadurch gekennzeichnet, dass** die Vorrichtung (1; 7; 10; 15) zumindest ein oder mehrere Flächen aufweist (3), wobei eine fiktive Hüllfläche (14) entlang eines Außenrandes der Fläche oder Flächen (3) annähernd eine dreidimensionale Fruchtform hat.

3. Insektenbekämpfungsvorrichtung (1; 7; 10; 15) nach Anspruch 2, **dadurch gekennzeichnet, dass** die dreidimensionale Kontur (2) eine größere Oberfläche aufweist als eine Oberfläche der fiktiven Hüllfläche (14).

4. Insektenbekämpfungsvorrichtung (1; 7; 10; 15) nach Anspruch 1, 2 oder 3, **dadurch gekennzeichnet, dass** die dreidimensionale Kontur (2) zumindest zwei Flächen aufweist, die beweglich zueinander aneinandergeordnet sind.

5. insektenbekämpfungsvorrichtung (1; 7; 10; 15) nach einem der vorhergehenden Ansprüche, **dadurch gekennzeichnet, dass** die Insektenbekämpfungsvorrichtung (1; 7; 10; 15) eine erste und eine zweite Fläche aufweist, die einander gegenüberliegen, wobei die erste Fläche kleiner ist als die zweite Fläche.

6. Insektenbekämpfungsvorrichtung (1; 7; 10; 15) nach einem der vorhergehenden Ansprüche, **dadurch gekennzeichnet, dass** sie im wesentlichen annähernd gerade Flächen aufweist.

7. Insektenbekämpfungsvorrichtung (1; 7; 10; 15) nach einem der vorhergehenden Ansprüche, **dadurch gekennzeichnet, dass** sie in einem Transportzustand ein geringeres Volumen einnimmt als in einem Betriebszustand.

8. Insektenbekämpfungsvorrichtung (1; 7; 10; 15) nach einem der vorhergehenden Ansprüche, **dadurch gekennzeichnet, dass** die dreidimensionale Kontur (2) ein einzelnes Bauteil aufweist, das die wesentliche Oberfläche der Kontur (2) aufweist.

9. Insektenbekämpfungsvorrichtung (1; 7; 10; 15) nach einem der vorhergehenden Ansprüche, **dadurch gekennzeichnet, dass** die Vorrichtung (1; 7; 10; 15) im wesentlichen einen biologisch abbaubaren Werkstoff aufweist.

10. Insektenbekämpfungsvorrichtung (1; 7; 10; 15) nach Anspruch 9, **dadurch gekennzeichnet, dass** die Vorrichtung (1; 7; 10; 15), insbesondere der Werkstoff, ein Fungizid aufweist.

11. Insektenbekämpfungsvorrichtung (1; 7; 10; 15) nach einem der vorhergehenden Ansprüche, **dadurch gekennzeichnet, dass** ein Insektizid in einem Farbstoff auf der Oberfläche der Kontur (2) aufgetragen ist.

12. Insektenbekämpfungsvorrichtung (1; 7; 10; 15) nach einem der vorhergehenden Ansprüche, **dadurch gekennzeichnet, dass** die Vorrichtung (1; 7; 10; 15) ein Vergrämungsmittel aufweist.

13. Insektenbekämpfungsvorrichtung (1; 7; 10; 15) nach einem der vorhergehenden Ansprüche, **dadurch gekennzeichnet, dass** die Vorrichtung (1; 7; 10; 15) eine Aufhängeeinrichtung (5) sowie eine Schutzhülle (19) aufweist, wobei die Schutzhülle (19) abnehmbar ist, während gleichzeitig die Vorrichtung (1; 7; 10; 15) zur Vermeidung eines direkten Kontaktes mit der dreidimensionalen Kontur (2) über die Aufhängeeinrichtung (5) gehalten werden kann.

14. Insektenbekämpfungsvorrichtung (1; 7; 10; 15) insbesondere nach Anspruch 1, **dadurch gekennzeichnet, dass** die Vorrichtung (1; 7; 10; 15) Bestandteil eines Baukastens zur Insektenbekämpfung ist, wobei der Baukasten vorzugsweise ein Klebemittel zum Fangen von Insekten aufweist, welches auf die Vorrichtung (1; 7; 10; 15) wiederabnehmbar aufbringbar ist.

15. Insektenbekämpfungsvorrichtung (1; 7; 10; 15) insbesondere nach Anspruch 1, **dadurch gekennzeichnet, dass** die Vorrichtung (1; 7; 10; 15) Bestandteil eines Baukastens ist, wobei der Baukasten verschiedene Elemente (20, 21) aufweist, aus denen vorzugsweise unterschiedliche dreidimensionale Konturen (2) herstellbar sind, die verschiedene Fruchtformen imitieren.

16. Anwendung einer Insektenbekämpfungsvorrichtung (1; 7; 10; 15) nach Anspruch 1 gegen Fluginsekten, **dadurch gekennzeichnet, dass** die Vorrichtung (1; 7; 10; 15) einen ersten Bereich aufweist, der hauptsächlich in einem ersten Wellenlängenbereich ausstrahlt, wobei der erste Bereich teilweise unterbrochen von demgegenüber zweiten, kleineren Bereichen ist, die in einem anderen Wellenlängenbereich ausstrahlen.

17. Anwendung einer Insektenbekämpfungsvorrichtung (1; 7; 10; 15) nach Anspruch 1 gegen Fruchtfliegen, **dadurch gekennzeichnet, dass** die Vorrichtung (1; 7; 10; 15) im aufgehängten Zustand eine größere erste Gesamtfläche aufweist, die in etwa horizontal angeordnet ist, gegenüber einer zweiten Gesamtfläche, die in etwa vertikal angeordnet ist.

18. Anwendung einer Insektenbekämpfungsvorrichtung (1; 7; 10; 15) nach Anspruch 1 gegen Stall- und/oder Hausfliegen, **dadurch gekennzeichnet, dass** die Vorrichtung (1; 7; 10; 15) im aufgehängten Zustand eine größere zweite Gesamtfläche aufweist, die in etwa vertikal angeordnet ist, gegenüber einer ersten Gesamtfläche, die in etwa horizontal angeordnet ist.

## Revendications

1. Dispositif pour maîtriser les insectes (1 ; 7 ; 10) qui a approximativement une forme de fruit et qui présente une structure tridimensionnelle (2) comportant des espaces ouverts (4) et une pluralité de surfaces (3) dans ladite structure, les insectes pouvant venir directement au contact des dites surfaces depuis l'extérieur de la structure (2).

2. Dispositif pour maîtriser les insectes (1 ; 7 ; 10) selon la revendication 1, dans lequel le dispositif (1 ; 7 ; 10) comporte au moins un ou plusieurs éléments en forme de disque (3) et dans lequel une surface enveloppante factice le long des bords extérieurs de l'élément en forme de disque (3) présente approximativement la forme d'un fruit tridimensionnel.

3. Dispositif pour maîtriser les insectes (1 ; 7 ; 10) selon la revendication 2, dans lequel la structure tridimensionnelle (2) présente une plus grande aire de surface que l'aire de surface de la surface enveloppante factice.

4. Dispositif pour maîtriser les insectes (1 ; 7 ; 10) selon la revendication 1, 2 ou 3, dans lequel la structure tridimensionnelle (2) comprend deux éléments ou plus qui sont mobiles l'un par rapport à l'autre.

5. Dispositif pour maîtriser les insectes (1 ; 7 ; 10) selon l'une quelconque des revendications précédentes, dans lequel le dispositif pour contrôler des insectes (1 ; 7 ; 10) présente des première et seconde feuilles qui sont opposées l'une à l'autre, la première feuille étant plus petite que la seconde feuille.

6. Dispositif pour maîtriser les insectes (1 ; 7 ; 10) selon l'une quelconque des revendications précédentes, présentant des surfaces approximativement planes.

7. Dispositif pour maîtriser les insectes (1 ; 7 ; 10) selon l'une quelconque des revendications précédentes, occupant un volume moindre dans un état de transport que dans un état de fonctionnement.

8. Dispositif pour maîtriser les insectes (1 ; 7 ; 10) selon l'une quelconque des revendications précédentes, dans lequel la structure tridimensionnelle (2) contient un seul élément contenant l'aire de surface essentielle de la structure (2).

9. Dispositif pour maîtriser les insectes (1 ; 7 ; 10) selon l'une quelconque des revendications précédentes, dans lequel le dispositif (1 ; 7 ; 10) comprend un matériau biodégradable.

10. Dispositif pour maîtriser les insectes (1 ; 7 ; 10) selon la revendication 9, dans lequel le dispositif (1 ; 7 ; 10) comprend un fongicide.

11. Dispositif pour maîtriser les insectes (1 ; 7 ; 10) selon l'une quelconque des revendications précédentes, dans lequel un insecticide est appliqué à une ou plusieurs aires de surfaces de la structure tridimensionnelle (2).

12. Dispositif pour maîtriser les insectes (1 ; 7 ; 10) selon l'une quelconque des revendications précédentes, dans lequel le dispositif (1 ; 7 ; 11) contient un répulsif.

13. Dispositif pour maîtriser les insectes (1 ; 7 ; 10) selon l'une quelconque des revendications précédentes, dans lequel le dispositif (1 ; 7 ; 11) contient un moyen de suspension (5) et un couvercle de protection (14), le couvercle de protection (14) étant amovible alors que le dispositif (1 ; 7 ; 10) peut être simultanément tenu par le moyen de suspension (5) pour éviter un contact direct avec la structure tridimensionnelle (2).

14. Dispositif pour maîtriser les insectes (1 ; 7 ; 10) selon la revendication 1, dans lequel le dispositif (1 ; 7 ; 10) constitue une partie d'une panoplie de maîtrise des insectes.

15. Dispositif pour maîtriser les insectes (1 ; 7 ; 10) selon la revendication 14, dans lequel la panoplie comprend une variété d'éléments à partir desquels peuvent être construites diverses structures tridimensionnelles (2), imitent diverses formes de fruits.

16. Utilisation d'un dispositif pour maîtriser les insectes (1 ; 7 ; 10) selon la revendication 1, contre les insectes volants, dans laquelle le dispositif (1 ; 7 ; 10) contient une première région qui émet de façon prédominante dans une première plage spectrale, la première région étant partiellement interrompue par une seconde région, plus petite, qui émet dans une plage spectrale différente.

17. Utilisation d'un dispositif de contrôle des insectes (1 ; 7 ; 10) selon la revendication 1 contre les mouches des fruits, dans laquelle le dispositif (1 ; 7 ; 10), lorsqu'il est suspendu, a une première zone globale plus grande qui est approximativement horizontale par rapport à une seconde zone globale qui est sensiblement verticale.

18. Utilisation d'un dispositif de contrôle des insectes (1 ; 7 ; 10) selon la revendication 1 contre les mouches des étables et/ou des maisons, dans laquelle le dispositif (1 ; 7 ; 10), lorsqu'il est suspendu, a une seconde zone globale plus grande qui est sensiblement verticale par rapport à une première zone globale qui est sensiblement horizontale.
